# EUROPEAN PATENT SPECIFICATION

(11) **EP 1 786 166 B1**
(45) Date of publication and mention of the grant of the patent: **01.09.2010**
(21) Application number: 05110714.2
(22) Date of filing: 14.11.2005
(51) Int. Cl.: H04L 29/06

(54) **Method and apparatus for remotely managing electronic utility devices**
Verfahren und Vorrichtung zur Verwaltung von elektronischen Gebrauchsgeräten
Procédé et appareil pour la gestion à distance de dispositifs électroniques utilitaires

(43) Date of publication of application: 16.05.2007
(73) Proprietor: Sony Ericsson Mobile Communications AB, 221 88 Lund (SE)
(72) Inventor: Hansson, Emil, 211 59 Malmö (SE)
(74) Representative: Andersson, Björn E.

(56) References cited:
- WO-A-99/57838
- WO-A-2005/036325
- US-A1- 2002 044 225
- US-A1- 2004 203 387
- US-A1- 2005 160 152

## Description

### Technical Field of the Invention

The present invention relates to a communication apparatus and a method for remotely managing electronic utility devices.

### Description of Related Art

A communication apparatus, such as a mobile terminal, may be used for remotely managing an electronic utility device. An electronic utility device may e.g. be electronic home equipment, such as a video recorder, a TV, or a stereo.

An electronic utility device may be remotely managed in various ways. One approach is to use a single remote control for each electronic utility device. Each remote control may e.g. transmit control signals using an IR (InfraRed) control unit. Another approach is to use a mobile terminal for managing the electronic utility device. The mobile terminal may e.g. be connected to the electronic utility device by means of an IR interface, a cable interface, or a short-range radio interface.

With the technique known in the art, the mobile terminal needs to be located relatively closely to the electronic utility device, which it is desired to operate. For example, a short-range wireless link normally has a range of 0-10 meters. Thus, the possibility for remotely operating the electronic utility device is restricted to this range.

Furthermore, if the electronic utility device, which it is desired to operate, is not in sight for the user, the operative status of the electronic utility device is not known. Thus, it may happen that an attempt to operate the electronic utility device is made even though it is switched off. Consequently, power is wasted.

Furthermore, the capabilities of a certain electronic utility device may not be known to a mobile terminal used to manage it. For example, it may not be known whether a certain video recorder may record a certain file format. Thus, the electronic utility device may be instructed to carry out a task it is not capable of, which may end in an error. Also, the instruction has been transmitted without any responsive result. Thus, power has been wasted.

WO 99/57838 discloses, in Fig 9, a client device 12 which may be compared to a communication apparatus according to the introductory part of the appended claim 1.

### Summary of the Invention

According to a first embodiments of the invention, a communication apparatus for remotely managing electronic utility devices comprises an acquiring unit adapted acquire operability information relating to the operability of a first electronic utility device and at least a second electronic utility device; a matching unit adapted to determine based on the operability information whether the operability of the first electronic utility device matches the operability of the second electronic utility device; and a processing unit adapted to arrange the first electronic utility device in association with the second electronic utility device in a user interface when the operability of the first electronic utility device at least partly matches the operability of the second electronic utility device.

The operability information may comprise presence data. The matching unit may be adapted to determine whether presence data relating to the operability of the first electronic utility device at least partly matches presence data relating to the operability of the second electronic utility device.

The operability information may comprise status data. The matching unit may be adapted to determine whether status data relating to the operability of the first electronic utility device matches status data relating to the operability of the second electronic utility device.

The processing unit may be adapted to arrange the first and the second electronic utility devices in a common menu of the user interface when the operability of the first electronic utility device at least partly matches the operability of the second electronic utility device.

The processing unit may be adapted to arrange the first electronic utility device in a first menu of the user interface and the second electronic utility device in a second menu of the user interface, which is accessible via the first menu, when the operability of the first electronic utility device at least partly matches the operability of the second electronic utility device.

The communication apparatus may be IMS compatible and may be adapted to be operatively connected to the first and the second electronic utility devices through an IMS compatible communication network.

The communication apparatus may be adapted to be connectable to an IMS in-compatible electronic utility device through an IMS compatible gateway.

The processing unit may be adapted to arrange at least one of status information and presence data for any electronic utility device, for which operability information has been acquired.

The processing unit may be adapted to at least initiate communication between the first electronic utility device and the second electronic utility device when the operability of the first electronic utility device at least partly matches the operability of the second electronic utility device.

The communication apparatus may be a portable or handheld mobile radio communication equipment, a mobile radio terminal, a mobile telephone, a pager, a communicator, an electronic organizer, a smartphone or a computer.

According to a second embodiment of the invention, a method for remotely managing electronic utility devices comprises acquiring operability information relating to the operability of a first electronic utility device and at least a second electronic utility device; determining based on the acquired operability information whether the operability of the first electronic utility device matches the operability of the second electronic utility device; and arranging the first electronic utility device in association with the second electronic utility device in a user interface when the operability of the first electronic utility device at least partly matches the operability of the second electronic utility device.

The information may comprise presence data. The determining may comprise determining whether presence data relating to the operability of the first electronic utility device at least partly matches presence data relating to the operability of the second electronic utility device.

The operability information may comprise status data. The determining may comprise determining whether status data relating to the operability of the first electronic utility device matches status data relating to the operability of the second electronic utility device.

The arranging may comprise arranging the first and the second electronic utility devices in a common menu of the user interface when the operability of the first electronic utility device at least partly matches the operability of the second electronic utility device.

The arranging may comprise arranging the first electronic utility device in a first menu of the user interface and the second electronic utility device in a second menu of the user interface, which is accessible via the first menu, when the operability of the first electronic utility device at least partly matches the operability of the second electronic utility device.

The arranging may comprise arranging at least one of status information and presence data for any electronic utility device, for which operability information has been acquired.

The method may also comprise initiating communication between the first electronic utility device and the second electronic utility device when the operability of the first electronic utility device at least partly matches the operability of the second electronic utility device.

According to a third embodiment of the invention, a computer program product comprises computer program code means for executing the method for remotely managing electronic utility devices, when said computer program code means are run by an electronic device having computer capabilities.

According to a fourth embodiment, a computer readable medium having stored thereon a computer program product comprises computer program code means for executing the method a method for remotely managing electronic utility devices when said computer program code means are run by an electronic device having computer capabilities.

Further embodiments of the invention are defined in the dependent claims.

Embodiments of the invention provide a communication apparatus for remote operation of electronic utility devices having improved flexibility.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of embodiments of the invention will appear from the following detailed description, reference being made to the accompanying drawings, in which:
Fig. 1 is a schematic view of a communication apparatus operatively connected to electronic utility devices;
Fig. 2 is a block diagram of the communication apparatus; and
Fig. 3 is a flow-chart of a method for remotely managing at least one electronic utility device.

### Detailed Description of Embodiments

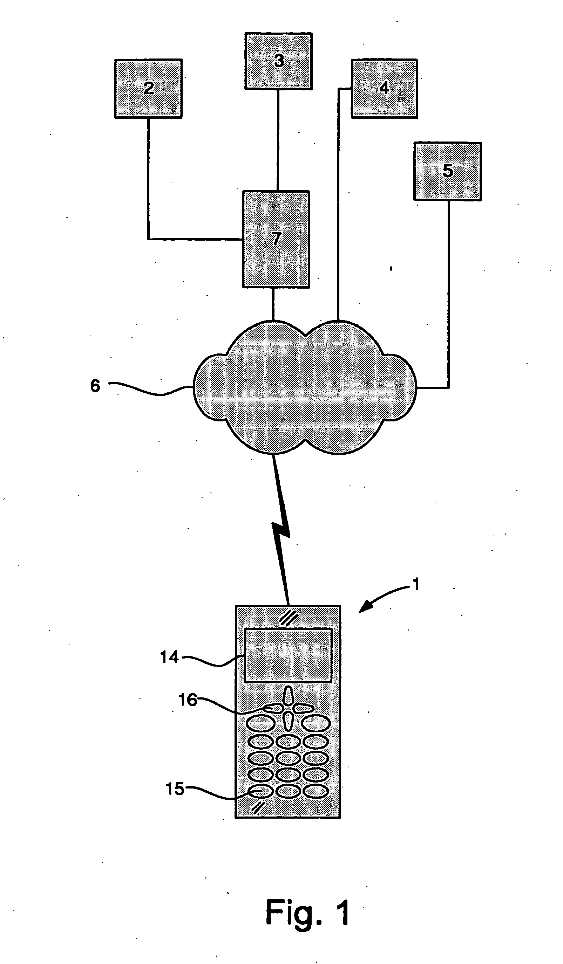

Fig. 1 illustrates an embodiment of a communication apparatus 1 operatively connected to a plurality of electronic utility devices 2, 3, 4, 5. The communication apparatus 1 is operatively connected to at least a first and a second electronic utility device 2, 3. The communication apparatus 1 may be connected to the electronic utility devices 2-5 through a communication network 6. In the embodiment illustrated in Fig. 1, some of the electronic utility devices 2, 3 are operatively connected to the communication network 6 through a gateway 7. Other electronic utility devices 4, 5 are operatively connected directly to the communication network 6.

Information relating to the operability of the electronic utility devices 2-5 may be acquired by the communication apparatus 1. The operability information may comprise at least one of status data and presence data. The status data may indicate the present status of the electronic utility device 2-5. The presence data may indicate one or more capabilities of the electronic utility device 2-5.

In the following, reference will be made to a first and a second electronic utility device 3, 4. However, this is only for illustrative purposes. A first and a second electronic utility device 3, 4 are mentioned. However this should not be interpreted as limiting. Instead, in other embodiments, a first and at least a second electronic utility device 3, 4 are managed.

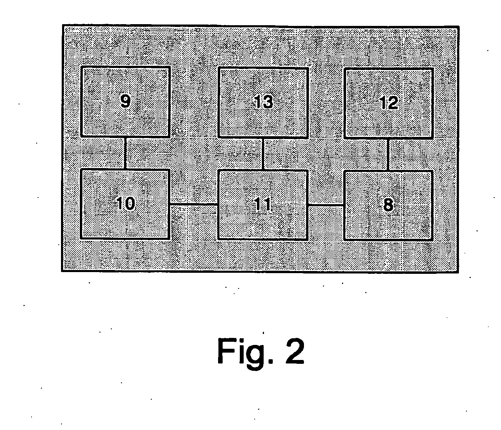

Furthermore, the electronic communication apparatus 1 is adapted to match operability information relating to the operability of the first electronic utility device 2 with operability information relating to the operability of at least the second electronic utility device 3. When the operability information for the first and the second electronic utility device 2, 3 match at least partly, the first and the second electronic utility devices 2, 3 are arranged in association in a user interface 8 (Fig. 2). For example, the first electronic utility device 2 may be arranged in a first menu of the output interface 8. When any operability information for the first electronic utility device 2 matches any operability information for another electronic utility device 3-5, the other electronic utility device 3-5 is arranged in a second menu of the output interface 8. Alternatively or additionally, when any operability information for the first electronic utility device 2 matches any operability information for another electronic utility device 3-5, the first and the other electronic utility devices 2-5 are arranged in a common menu of the output interface 8. For example, when the first and the other electronic utility device have a common status, such as "on", "idle", "busy", etc. the first and the other electronic utility device 2-5 are arranged in a common menu. Alternatively, when the first and the other electronic utility devices have matching capabilities, such as "receive" - "present", "receive" - "record", "acquire" - "print", etc. the first and the other electronic utility devices 2-5 are arranged in a first and a second menu. In the first menu, the first electronic utility device 2 may be presented as a source device. In the second menu, the other electronic utility device 3-5 may be presented as a destination device. For example, data to be displayed may be provided by the first electronic utility device 2 being arranged in the first menu. The data provided by the first electronic utility device 2 may be displayed by the other electronic utility device 3-5 arranged in the second menu. The data to be displayed may be transmitted directly from the first electronic utility device 2 to the other electronic utility device 3-5. The transmission may be initiated from the communication apparatus 1. A user may e.g. select a source device, when it is presented in the first menu. Then, the user may select a destination device, which is presented in the second menu in response to selecting the source device. Alternatively, the destination device is selected from a first menu, and the source device is selected from a second menu, which is accessible from the first menu. The transmission may be automatically initiated upon selecting the destination device. The automatic initiation may be provided by communicating a request from the communication apparatus 1 to either of the electronic utility devices 2-5, between which data should be communicated, to set up a session between them.

As matching of operability information for electronic utility devices 2-5 are performed, the electronic utility devices 2-5 may be arranged in association only if they have matching operability. Thus, embodiments of the invention allows for increased flexibility, as the electronic utility devices may be interactively arranged in dependence of their operability information. Furthermore, embodiments of the invention provides for decreased power consumption, as the user does not have to make selections that ultimately leads to a communication failure due to inoperable electronic utility devices 2-5.

The communication apparatus 1 may be IMS (IP Multimedia Subsystem) compatible. Furthermore, the communication network 6 may be IMS compatible. Also, the gateway 7 and/or the electronic utility devices 2-5 may be IMS compatible. Furthermore, the communication apparatus 1, the communication network 6, the gateway 7 and/or the electronic utility devices may be adapted to communicate using SIP (Session Initiation Protocol). SIP allows endpoints to share a specific session. Using IMS and/or SIP provides easy accessing, as IP addressing may be utilized.

Furthermore, using a communication network 6 allows for managing electronic utility devices, which are located remote from the communication apparatus 1. Also, each electronic utility device 2-3 may be positioned at distant locations from each other.

In some embodiments, the electronic utility devices 2-5 are IMS and/or SIP in-compatible. Then, the gateway 7 is adapted to communicate with the electronic utility devices 2-5 by means of another communication standard, such as Bluetooth®, USB (Universal Serial Bus), and/or WLAN (Local Area Network) according to any IEEE 802.11 standard. Also, the gateway 7 may be IMS and/or SIP compatible to communicate with the communication apparatus 1. Thus, the gateway 7 is in this embodiment adapted to translate operability information if necessary. The gateway 7 may be connected to the network 6 via a wired or wireless connection.

The gateway 7 may be adapted to translate operability information having a first format to operability information having a second format. The first format may be the Bluetooth profile format. The second format may be the RPID (Rich Presence Information Data) format. Alternatively, or additionally, the translation may be performed by mapping Bluetooth commands to SIP actions.

In some embodiments, the gateway 7 is adapted to translate USB classes to device capabilities according to the RPID and/or PIDF (Presence Information Data Format) format. USB commands may be mapped to SIP actions.

The gateway 7 has knowledge how to communicate with various electronic utility devices 2-5 connected to it. Furthermore, the gateway 7 may have knowledge of the capabilities of the electronic utility devices 2-5 connected to it.

The operability information may e.g. be transmitted according to PIDF and/or RPID, according to which standardized capabilities and status of the electronic utility device 2-5 may be included in a message, such as status, address, and/or capabilities. Non-standardized capabilities and status information may e.g. be communicated as defined in the Internet draft "User Agent Capability Status Extension", which may be used to communicate capabilities, such as "audio", "video", "text", "supported SIP messages" etc.

Examples of status for the electronic utility devices 2-5 are "on", "off", "idle", "ready", "no-paper", "paper_jam", "busy", etc. These examples of status should not be interpreted as exhaustive. Other examples may exist in other embodiments.

Examples of capabilities are e.g. "print", "scan", and/or "fax" for e.g. a printer or a copying machine, "take_picture", "record_video", "stream_video", and/or "download_files" for e.g. a camera, "store_files", "record_video", "stream_video", and/or "download_files" for e.g. a computer, "receive_broadcast data" for a TV receiver or satellite receiver, "audio communication", etc. These examples of capabilities should not be interpreted as exhaustive. Other examples may exist in other embodiments.

The electronic utility devices 2-5 may address other electronic utility devices using IP addressing. Furthermore, a specific electronic utility device 2-5 may be identified using IP addressing. Operability information may be transmitted from the electronic utility devices 2-5, or the gateway 7, in :a message. The message may e.g. comprise a document including the operability information: The document may be an XML document. If the electronic utility device 2-5 is a printer, the XML document may e.g. have the following content:

```
      <address>printer@gateway.com</address>
      <status>no_paper</status>
      <capabilities>         print
                             scan
                            fay
      </capabilities>
```

In this example, the operability information is transmitted via a gateway, "gateway.com", to which the printer is connected. The status of the printer is "no_paper", i.e. the printer has not access to any paper. Furthermore, the capabilities of the printer are "print", "scan" and "fax".

If the electronic utility device is a camera, the XML document may have the following content:

```
      <address>camera@gateway.com</address>
      <status>ready</status>
      <capabilities>         take_picture
                             record video
                             download file
      </capabilities>
```

In this example, the operability information is transmitted via the gateway "gateway.com", to which the camera is connected. The status of the camera is "ready", i.e. it may perform any function, which it is capable of. The capabilities are "take_picture", "record_video", and "download_file", i.e. a file may be downloaded from the camera, which may comprise a storage medium (not shown).

Fig. 2 illustrates some components of an embodiment of the communication apparatus 1. The communication apparatus 1 comprises the user interface 8, an acquiring unit 9, a matching unit 10, and a processing unit 11. In some embodiments, the communication apparatus 1 may also comprise an output device 12, a memory 13.

The acquiring unit 9 is adapted to acquire information relating to the operability of at least a first and a second electronic utility device 2-5. The operability information may be acquired by receiving messages containing the operability information, e.g. as described above. Alternatively, the operability information is acquired from the memory 13, at which received or retrieved operability information may be stored.

The matching unit 10 is adapted to determine, based on the acquired operability information, whether the operability of the first electronic utility device 2 matches the operability of at least the second electronic utility device 3.

The matching unit 10 may be adapted to determine whether presence data relating to the operability of the first electronic utility device 2 at least partly matches presence data relating to the operability of the second electronic utility device 3. Alternatively or additionally, the operability information comprises status data: if so, the matching unit 10 may be adapted to determine whether status data relating to the operability of the first electronic utility device 2 matches status data relating to the operability of at least the second electronic utility device 3.

The matching unit 10 may determine that the operability information of the first electronic utility device 2 at least partly matches the operability information of the second electronic utility device 3, e.g. if the status of the first electronic utility device 2 corresponds to the status of the second electronic utility device 3. Corresponding status may e.g. be "available", "ready", and "on", or "unavailable" and "off". The matching unit 10 may alternatively or additionally be adapted to determine that the operability information of the first electronic utility device 2 matches the operability information of the second electronic utility device 3, e.g. if presence data for the first electronic utility device at least partly corresponds to presence data for the second electronic utility device. The presence data may at least partly correspond if at least one capability of the first electronic utility device matches at least one capability of the second electronic utility device.

The capabilities need not be the same to match. Instead, matching capabilities may be inter-operable capabilities. For example, the first electronic utility device 2 may have the capability download data, i.e. data can be downloaded from the device. The first electronic utility device may e.g. be a camera. The second electronic utility device 3 may have the capability display data, i.e. data may be displayed by the device. The second electronic utility device 3 may e.g. be a display or TV. The capabilities download_data and display_data may be interoperable. Thus, the operability for the first and second electronic utility devices 2, 3 match at least partly. Of course, the first and second electronic utility devices 2, 3 may each have further capabilities, that may, or may not, be interoperable. The matching unit 10 may comprise or have access to a look-up table containing information of matching operability information.

The processing unit 11 is adapted to arrange the first electronic utility device 2 in association with the second electronic utility device 3 when the operability of the first electronic utility device 2 at least partly matches the operability of the second electronic utility device 3. For example, electronic utility devices 2-5 having corresponding status, such as "ready", "idle", and/or "on", may be arranged in a common menu, such as a menu for presenting available electronic utility devices. Furthermore, electronic utility devices 2-5 that have at least one capability in common with another electronic utility device may be arranged in a common menu.

The user interface may comprise one or several input devices for navigating within menus presented by the output device 12. The output device 12 may e.g. comprise a display 14. The input devices may e.g. comprise a keypad 15, and/or a joystick 16 or rocker pad. The processing unit 11 may be adapted to arrange the electronic utility devices in dependence of whether the operability information for the electronic utility devices match.

For example, an electronic utility device, such as a satellite receiver, may have the capability "receive_broadcast_data" and the current status "on". Thus, the satellite receiver may be arranged in a first menu. The first menu may comprise source devices. An electronic utility device, such as a display and/or a TV, may have the capability "display_broadcast_data" and have the status "ready". The capabilities "receive_broadcast_data" and "display_broadcast_data" may be determined as being inter-operable, and thus to match. The display and the TV may be arranged in a second menu. When the satellite receiver is selected, e.g. by means of an input device when presented, in the first menu, the display and the TV are presented in the second menu, in which they have been arranged. The second menu may be provided for presenting destination devices. Thus, the user may select, by means of an input device, the destination device, at which broadcast data provided by the satellite receiver should be presented. Selecting the destination device may automatically set up a session between the source device and the destination device.

When a session is to be established between two electronic utility devices, a session between the device may be set up by SIP. Session data may e.g. be negotiated by means of the SDP session description protocol. For example for the "broadcast_data" capability, it may be a capability to only broadcast the data, such as a video and/or audio data. The session may be set up by using SIP and codec may e.g. be negotiated by means of the SDP session description protocol.

The processing unit 11 may be adapted to arrange at least one of status information and presence data for any electronic utility device 2-5, for which information relating to the operability of the electronic utility device 2-5 has been acquired.

Furthermore, the processing unit 11 may be adapted to at least initiate communication between the first electronic utility device 2 and the second electronic utility device 3 when the operability of the first electronic utility device 2 at least partly matches the operability of the second electronic utility device 3. Thus, data may be transmitted directly between the first and the second electronic utility devices 2, 3.

The Processing unit 11 may e.g. be implemented by a processor, such as a CPU (Central Processing unit), running software to implement its functions. Alternatively, the processing unit is implemented by an ASIC (Application Specific Integrated Circuit) or an FPGA (Field Programmable Gate Array). Furthermore, a single processor may e.g. implement any of acquiring unit 9, the matching unit 10, the processing unit 9, and parts of the processing interface 8, such as arrangement of menus.

The communication apparatus 1 may e.g. be a portable or handheld mobile radio communication equipment, a mobile radio terminal, a mobile telephone, a pager, a communicator, an electronic organizer, a smartphone or a computer. The electronic utility device 2-5 may e.g. be a TV, a display, a printer, a desktop computer, a laptop computer, a DVD player, a camera, a projector, a freezer, a refrigerator, a heater, etc.

The communication network 6 may be a WAN (Wide Area Network), such as the Internet. Alternatively, the communication network 6 is a LAN (Local Area Network). The communication apparatus 6 may be wirelessly connected to the communication network 6, e.g. via a mobile communication network, such as a GSM (Global System for Mobile communication), or UMTS (Universal Mobile Telecommunication System) network. Thus, the communication apparatus 1 may comprise a transceiver (not shown) for communicating with the communication network 6.

In some embodiments, several gateways 7 are provided, which are connected to the communication network 6. Alternatively or additionally, electronic utility devices 2-5 are connected to the communication network at different access points. Thus, the communication apparatus 1 may arrange and present operability information for electronic utility devices 2-5, which are located at distant locations. Alternatively, all electronic utility devices 2-5 arranged in association in the communication apparatus 1 are located at a single location, such as at a home or an office. Thus, embodiments of the invention enable presentation of electronic utility devices 2-5 in a single communication apparatus 1, irrespectively whether they are located at a single or at multiple locations. Furthermore, embodiments of the invention provide a user interface 8 that is easy to use for remotely managing the electronic utility devices 2-5. Thus, e.g. the inter-operability of the electronic utility devices 2-5 is clearly manageable.

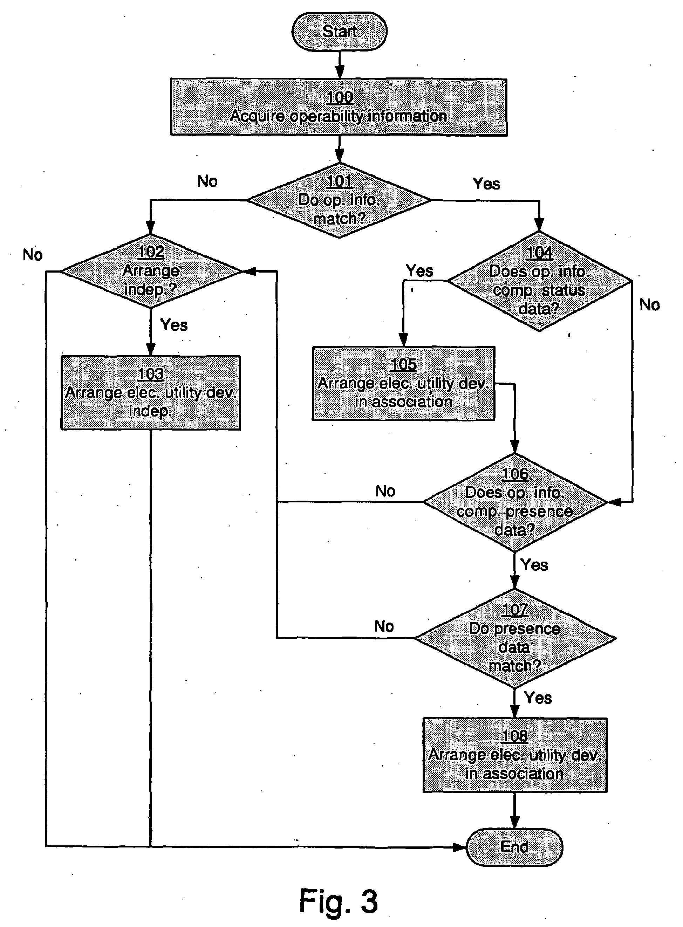

Fig. 3 illustrates an embodiment of a method for remotely managing the electronic utility devices 2-5, e.g. from the communication apparatus 1. In a first step 100, operability information relating to the first and at least the second electronic utility devices 2, 3 is acquired. In step 101, it is determined whether the operability information for the first and the second electronic utility devices 2, 3 at least partly match. If the answer in step 101 is no, the procedure proceeds to step 102. In step 102, it is determined whether the first and/or the second electronic utility devices 2, 3 should be independently arranged. For example, if the status for one of the devices is "on" and the status for the other is "off", the device having status "on" may be arranged in a menu but not the device having status "off". Alternatively, the first and the second electronic utility devices 2, 3 may be arranged in different menus, one in a menu for electronic utility devices having status "on", the other in a menu for electronic devices having status "off". Still alternatively, the electronic utility devices 2-5 may be arranged in a common menu but in different styles. For example, one could be presented in bold, the other faded when presented. If the answer in step 102 is yes the procedure proceeds to step 103, wherein the first electronic utility device 2 is independently arranged. Then, the procedure is ended. If the answer in step 102 is no, the procedure is ended.

If the answer in step 101 is yes, the procedure proceeds to step 104. In step 104, it is determined whether the operability information comprises any status data. If the answer in step 104 is yes the procedure proceeds to step 105. In step 105, the first and the second electronic utility device are arranged in association, such as in a common menu. If the answer in step 104 is no, and from step 105, the procedure proceeds to step 106. In step 106, it is determined whether the operability information comprises any presence data. If the answer in step 106 is no, the procedure proceeds to step 102. If the answer in step 106 is yes, the procedure proceeds to step 107. In step 107 it is determined whether the presence data for the first and the second electronic utility devices at least partly match. If the answer in step 107 is yes the procedure proceeds to step 108. In step 108, the first and the second electronic utility devices 2, 3 are arranged in association. The devices may e.g. be arranged within a common sub menu, e.g. if they have matching capabilities as well as capabilities matching another electronic utility device arranged in a main menu. Alternatively, the first electronic utility device 2 is arranged in a main menu and the second electronic utility device 3 in a sub menu accessible from the main menu. Then, the procedure is ended.

The method described in Fig. 3 is only an example. Other embodiments may comprise other steps. Still other embodiments comprise some of the steps illustrated in Fig. 3. For example, any of steps 102-107 need not be carried out in other embodiments. Instead, the first and second electronic utility devices 2, 3 may be arranged in association as soon as it is determined that their operability match at least partly.

Embodiments of the invention allows for managing several electronic utility devices 2-5. This may be useful if it is desired to have knowledge of their capabilities, and/or whether the operability of several electronic utility devices 2-5 match. A user need not manually find out their capabilities, as it may be done automatically. Furthermore, the user need not manually determine whether the electronic utility devices 2,3 are inter-operable. Also this may be done automatically. This allows for convenient managing of the electronic utility devices 2-5. Thus, the managing may be made efficiently and correctly.

Embodiments of the invention also allows for remotely managing an operative process between a plurality of electronic utility devices. For example, a first electronic utility device, such as a server or personal computer, may be operated to provide a file to a second electronic utility device, such as a printer or display. The first and the second electronic utility devices may be located at distant locations, such as at the office and at home. Thus, it is possible by means of embodiments of the invention, to manage and control inter-operability of several electronic utility devices, which may be located at distant locations.

Embodiments of the invention may be embedded in a computer program product, which enables implementation of the method and functions described herein. The invention may be carried out when the computer program product is loaded and run in a system having computer capabilities. Computer program, software program, program product, or software, in the present context mean any expression, in any programming language, code or notation, of a set of instructions intended to cause a system having a processing capability to perform a particular function directly or after conversion to another language, code or notation.

The present invention has been described above with reference to specific embodiments. However, other embodiments than the above described are equally possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A communication apparatus (1.) for remotely managing electronic utility devices (2-5), comprising:
an acquiring unit (9) adapted to acquire operability information relating to the operability of a first electronic utility device (2) and at least a second electronic utility device (3);
a matching unit (10) adapted to determine, based on the acquired operability information and on a look-up table containing information of matching operability information, whether the operability of the first electronic utility device (2) matches the operability of the second electronic utility device (3); and
a processing unit (11) adapted, when the operability of the first electronic utility device (2) at least partly matches the operability of the second electronic utility device (3), to arrange the first electronic utility device in association with the second electronic utility device in a user interface (8), **characterized in that** the processing unit further is adapted, when a user selects the second electronic utility device in said user interface, to initiate communication between the first electronic utility device (2) and the second electronic utility device (3) by automatically setting up a session between said first and second electronic utility devices.

2. The communication apparatus according to claim 1, wherein the operability information comprises presence data, and the matching unit (10) is adapted to determine whether presence data relating to the operability of the first electronic utility device (2) at least partly matches presence data relating to the operability of the second electronic utility device (3).

3. The communication apparatus according to claim 1 or 2, wherein the operability information comprises status data, and the matching unit (10) is adapted to determine whether status data relating to the operability of the first electronic utility device (2) matches status data relating to the operability of the second electronic utility device (3).

4. The communication apparatus according to any of claims 1 to 3, wherein the processing unit (11) is adapted to arrange the first and the second electronic utility devices (2, 3) in a common menu of the user interface (8) when the operability of the first electronic utility device (2) at least partly matches the operability of the second electronic utility device (3).

5. The communication apparatus according to any of claims 1 to 3, wherein the processing unit (11) is adapted to arrange the first electronic utility device (2) in a first menu of the user interface (8) and the second electronic utility device (3) in a second menu of the user interface (8), which is accessible via the first menu, when the operability of the first electronic utility device (2) at least partly matches the operability of the second electronic utility device (3).

6. The communication apparatus according to any of the previous claims, wherein the communication apparatus (1) is IMS compatible and adapted to be operatively connected to the first and the second electronic utility devices (2, 3) through an IMS compatible communication network (6).

7. The communication apparatus according to any of the previous claims, wherein the communication apparatus is adapted to be connectable to an IMS in-compatible electronic utility device (4, 5) through an IMS compatible gateway (7).

8. The communication apparatus according to any of the previous claims, wherein the processing unit (11) is adapted to arrange at least one of status information and presence data for any electronic utility device (2-5), for which operability information has been acquired.

9. The communication apparatus according to any of the previous claims, wherein the communication apparatus (1) is a portable or handheld mobile radio communication equipment, a mobile radio terminal; a mobile telephone, a pager, a communicator, an electronic organizer, a smartphone or a computer.

10. A method for remotely managing electronic utility devices, comprising:
acquiring operability information relating to the operability of a first electronic utility device (2) and at least a second electronic utility device (3);
determining, based on the acquired operability information and on a look-up table containing information of matching operability information, whether the operability of the first electronic utility device (2) matches the operability of the second electronic utility device (3); and
when the operability of the first electronic utility device (2) at least partly matches the operability of the second electronic utility device (3), arranging the first electronic utility device (2) in association with the second electronic utility device (3) in a user interface (8), **characterized in that** when a user selects the second electronic utility device in said user interface, communication is initiated between the first electronic utility device (2) and the second electronic utility device (3) by automatically setting up a session between said first and second electronic utility devices.

11. The method according to claim 10, wherein the information comprises presence data, and the determining comprises determining whether presence data relating to the operability of the first electronic utility device (2) at least partly matches presence data relating to the operability of the second electronic utility device (3).

12. The method according to claim 10 or 11, wherein the operability information comprises status data, and the determining comprises determining whether status data relating to the operability of the first electronic utility device (2) matches status data relating to the operability of the second electronic utility device (3).

13. The method according to any of claims 10 to 12, wherein the arranging comprises arranging the first and the second electronic utility devices (2, 3) in a common menu of the user interface when the operability of the first electronic utility device (2) at least partly matches the operability of the second electronic utility device (3).

14. The method according to any of claims 10 to 12, wherein the arranging comprises arranging the first electronic utility device (2) in a first menu of the user interface (8) and the second electronic utility device (3) in a second menu of the user interface (8), which is accessible via the first menu, when the operability of the first electronic utility device (2) at least partly matches the operability of the second electronic utility device (3)

15. The method according to any of claims 10 to 14, wherein the arranging comprises arranging at least one of status information and presence data for any electronic utility device (2-5), for which operability information has been acquired.

16. A computer program product comprising computer program code means for executing the method according to any of claims 10 to 15, when said computer program code means are run by an electronic device having computer capabilities.

## Patentansprüche

1. Kommunikationsgerät (1) zur Fernverwaltung elektronischer Gebrauchsgeräte (2-5), welches aufweist:
eine Erfassungseinheit (9), welche Informationen über die Betriebsbereitschaft eines ersten elektronischen Gebrauchsgeräts (2) und mindestens eines zweiten elektronischen Gebrauchsgeräts (3) erfassen kann;
eine Vergleichseinheit (10), die anhand der erfassten Betriebsbereitschaftsinformationen und einer Nachschlagtabelle mit Informationen über entsprechende Betriebsbereitschaftsinformationen ermitteln kann, ob die Betriebsbereitschaft des ersten elektronischen Gebrauchsgeräts (2) mit der Betriebsbereitschaft des zweiten elektronischen Gebrauchsgeräts (3) übereinstimmt; und
eine Verarbeitungseinheit (11), welche, wenn die Betriebsbereitschaft des ersten elektronischen Gebrauchsgeräts (2) zumindest teilweise mit der Betriebsbereitschaft des zweiten elektronischen Gebrauchsgeräts (3) übereinstimmt, das erste elektronische Gebrauchsgerät in Verbindung mit dem zweiten elektronischen Gebrauchsgerät in einer Nutzerschnittstelle (8) anordnen kann, **dadurch gekennzeichnet, dass** die Verarbeitungseinheit weiterhin, wenn ein Nutzer das zweite elektronische Gebrauchsgerät in der Nutzerschnittstellc auswählt, eine Kommunikation zwischen dem ersten elektronischen Gebrauchsgerät (2) und dem zweiten elektronischen Gebrauchsgerät (3) durch automatischen Aufbau einer Sitzung zwischen dem ersten und dem zweiten elektronischen Gebrauchsgerät herstellen kann.

2. Kommunikationsgerät nach Anspruch 1, wobei die Betriebsbereitschaftsinformationen Präsenzdaten enthalten, und die Vergleichseinheit (10) ermitteln kann, ob die Präsenzdaten bezüglich der Betriebsbereitschaft des ersten elektronischen Gebrauchsgeräts (2) zumindest teilweise mit den Präsenzdaten bezüglich der Betriebsbereitschaft des zweiten elektronischen Gebrauchsgeräts (3) übereinstimmen.

3. Kommunikationsgerät nach Anspruch 1 oder 2, wobei die Betriebsbereitschaftsinformationen Statusdaten enthalten, und die Vergleichseinheit (10) ermitteln kann, ob die Statusdaten bezüglich der Betriebsbereitschaft des ersten elektronischen Gebrauchsgeräts (2) zumindest teilweise mit den Statusdaten bezüglich der Betriebsbereitschaft des zweiten elektronischen Gebrauchsgeräts (3) übereinstimmen.

4. Kommunikationsgerät nach einem der Ansprüche 1 bis 3, wobei die Verarbeitungseinheit (11) das erste und zweite elektronische Gebrauchsgerät (2, 3) in einem gemeinsamen Menü der Nutzerschnittstelle (8) anordnen kann, wenn die Bctriebsbercitschaft des ersten elektronischen Gebrauchsgeräts (2) zumindest teilweise mit der Betriebsbereitschaft des zweiten elektronischen Gebrauchsgeräts (3) übereinstimmt.

5. Kommunikationsgerät nach einem der Ansprüche 1 bis 3, wobei die Verarbeitungseinheit (11) das erste elektronische Gebrauchsgeräts (2) in einem ersten Menü der Nutzerschnittstelle (8) und das zweite elektronische Gebrauchsgerät (3) in einem zweiten Menü der Nutzerschnittstelle (8), auf das über das erste Menü zugegriffen werden kann, anordnen kann, wenn die Betriebsbereitschaft des ersten elektronischen Gebrauchsgeräts (2) zumindest teilweise mit der Betriebsbereitschaft des zweiten elektronischen Gebrauchsgeräts (3) übereinstimmt.

6. Kommunikationsgerät nach einem der vorstehenden Ansprüche, wobei das Kommunikationsgerät IMS-kompatibel ist und betrieblich mit dem ersten und zweiten elektronischen Gebrauchsgerät (2, 3) über ein Im-kompatibles Kommunikationsnetz (6) verbunden werden kann.

7. Kommunikationsgerät nach einem der vorstehenden Ansprüche, wobei das Kommunikationsgerät mit einem IMS-inkompatiblen Gebrauchsgerät (4, 5) über ein IMS-kompatibles Gateway (7) verbunden werden kann.

8. Kommunikationsgerät nach einem der vorstehenden Ansprüche, wobei die Verarbeitungseinheit (11) zumindest eine der Status- und Präsenzinformationen für jedes elektronische Gebrauchsgerät (2-5) anordnen kann, für das Betriebsbereitschaftsinformationen erfasst worden sind.

9. Kommunikationsgerät nach einem der vorstehenden Ansprüche, wobei das Kommunikationsgerät (1) eine tragbare oder Handheld-Mobilfunk-Kommunikationseinrichtung, eine mobile Funkendeinrichtung, ein Mobiltelefon, ein Pager, ein Kommunikationsgerät, ein elektronisches Notizbuch, ein Smartphone oder ein Computer ist.

10. Verfahren für die Fernverwaltung von elektronischen Gebrauchsgeräten, welches aufweist:
Erfassung von Informationen über die Betriebsbereitschaft eines ersten elektronischen Gebrauchsgeräts (2) und mindestens eines zweiten elektronischen Gebrauchsgeräts (3);
Ermittlung anhand der erfassten Betriebsbereitschaftsinformationen und einer Nachschlagtabelle mit Informationen über entsprechende Betriebsbereitschaftsinformationen, ob die Betriebsbereitschaft des ersten elektronischen Gebrauchsgeräts (2) mit der Betriebsbereitschaft des zweiten elektronischen Gebrauchsgeräts (3) übereinstimmt; und
wenn die Betriebsbereitschaft des ersten elektronischen Gebrauchsgeräts (2) zumindest teilweise mit der Betriebsbereitschaft des zweiten elektronischen Gebrauchsgeräts (3) übereinstimmt, das erste elektronische Gebrauchsgerät in Verbindung mit dem zweiten elektronischen Gebrauchsgerät in einer Nutzerschnittstelle (8) angeordnet wird, **dadurch gekennzeichnet, dass**, wenn ein Nutzer das zweite elektronische Gebrauchsgerät in der Nutzerschnittstelle auswählt, eine Kommunikation zwischen dem ersten elektronischen Gebrauchsgerät (2) und dem zweiten elektronischen Gebrauchsgerät (3) durch automatischen Aufbau einer Sitzung zwischen dem ersten und dem zweiten elektronischen Gebrauchsgerät hergestellt wird.

11. Verfahren nach Anspruch 10, wobei die informationen Präsenzdaten enthalten, und der Schritt der Ermittlung die Ermittlung enthält, ob die Präsenzdaten bezüglich der Betriebsbereitschaft des ersten elektronischen Gebrauchsgeräts (2) zumindest teilweise mit den Präsenzdaten bezüglich der Betriebsbereitschaft des zweiten elektronischen Gebrauchsgeräts (3) übereinstimmen.

12. Verfahren nach Anspruch 10 oder 11, wobei die Betriebsbereitschaftsinformationen Statusdaten enthalten, und der Schritt der Ermittlung die Ermittlung enthält, ob die Statusdaten bezüglich der Betriebsbereitschaft des ersten elektronischen Gebrauchsgeräts (2) zumindest teilweise mit den Statusdaten bezüglich der Betriebsbereitschaft des zweiten elektronischen Gebrauchsgeräts (3) übereinstimmen.

13. Verfahren nach einem der Ansprüche 10 bis 12, wobei der Schritt der Anordnung die Anordnung des ersten und zweiten elektronischen Gebrauchsgeräts (2, 3) in einem gemeinsamen Menü der Nutzerschnittstelle enthält, wenn die Betriebsbereitschaft des ersten elektronischen Gebrauchsgeräts (2) zumindest teilweise mit der Betriebsbereitschaft des zweiten elektronischen Gebrauchsgeräts (3) übereinstimmt.

14. Verfahren nach einem der Ansprüche 10 bis 12, wobei der Schritt der Anordnung die Anordnung des ersten elektronischen Gebrauchsgeräts (2) in einem ersten Menü der Nutzerschnittstelle (8), und des zweiten elektronischen Gebrauchsgeräts (3) in einem zweiten Menü der Nutzerschnittstelle (8), auf das über das erste Menü zugegriffen werden kann, enthält, wenn die Betriebsbereitschaft des ersten elektronischen Gebrauchsgeräts (2) zumindest teilweise mit der Betriebsbereitschaft des zweiten elektronischen Gebrauchsgeräts (3) übereinstimmt.

15. Verfahren nach einem der Ansprüche 10 bis 14, wobei der Schritt der Anordnung die Anordnung mindestens einer der Status- und Präsenzinformationen für jedes elektronische Gebrauchsgerät (2-5) enthält, für das Betriebsbereitschaftsinformationen erfasst worden sind.

16. Computerprogrammprodukt, welches Computcrprogrammcodcmittel zur Ausführung des Verfahrens nach einem der Ansprüche 10 bis 15 aufweist, wenn die Computerprogrammcodemittel auf einem elektronischen Gerät mit Computerfähigketten ablaufen.

## Revendications

1. Appareil de communication (1) destiné à gérer à distance des dispositifs utilitaires électroniques (2 à 5), comprenant :
une unité d'acquisition (9), conçue pour acquérir des informations de capacité de fonctionnement, intéressant la capacité de fonctionnement d'un premier dispositif utilitaire électronique (2) et d'au moins un second dispositif utilitaire électronique (3) ;
une unité de mise en correspondance (10), conçue pour déterminer, sur la base des informations de capacité de fonctionnement acquises et d'une table de consultation contenant des informations sur la mise en correspondance des informations de capacité de fonctionnement, si la capacité de fonctionnement du premier dispositif utilitaire électronique (2) correspond à la capacité de fonctionnement du second dispositif utilitaire électronique (3) ; et
une unité de traitement (11) conçue, lorsque la capacité de fonctionnement du premier dispositif utilitaire électronique (2) correspond au moins partiellement à la capacité de fonctionnement du second dispositif utilitaire électronique (3), pour disposer le premier dispositif utilitaire électronique en association avec le second dispositif utilitaire électronique dans une interface utilisateur (8) ;
**caractérisé en ce que** l'unité de traitement est en outre conçue, lorsqu'un utilisateur sélectionne le second dispositif utilitaire électronique dans ladite interface utilisateur, pour lancer une communication entre le premier dispositif utilitaire électronique (2) et le second dispositif utilitaire électronique (3) en établissant automatiquement une session entre lesdits premier et second dispositifs utilitaires électroniques.

2. Appareil de communication selon la revendication 1, dans lequel les informations de capacité de fonctionnement comprennent des données de présence et l'unité de mise en correspondance (10) est conçue pour déterminer si des données de présence intéressant la capacité de fonctionnement du premier dispositif utilitaire électronique (2) correspondent au moins partiellement à des données de présence intéressant la capacité de fonctionnement du second dispositif utilitaire électronique (3).

3. Appareil de communication selon la revendication 1 ou 2, dans lequel les informations de capacité de fonctionnement comprennent des données d'état et l'unité de mise en correspondance (10) est conçue pour déterminer si des données d'état intéressant la capacité de fonctionnement du premier dispositif utilitaire électronique (2) correspondent au moins partiellement à des données d'état intéressant la capacité de fonctionnement du second dispositif utilitaire électronique (3).

4. Appareil de communication selon l'une quelconque des revendications 1 à 3, dans lequel l'unité de traitement (11) est conçue pour disposer les premier et second dispositifs utilitaires électroniques (2, 3) dans un menu commun de l'interface utilisateur (8) lorsque la capacité de fonctionnement du premier dispositif utilitaire électronique (2) correspond au moins partiellement à la capacité de fonctionnement du second dispositif utilitaire électronique (3).

5. Appareil de communication selon l'une quelconque des revendications 1 à 3, dans lequel l'unité de traitement (11) est conçue pour disposer le premier dispositif utilitaire électronique (2) dans un premier menu de l'interface utilisateur (8) et le second dispositif utilitaire électronique (3) dans un second menu de l'interface utilisateur (8), qui est accessible via le premier menu, lorsque la capacité de fonctionnement du premier dispositif utilitaire électronique (2) correspond au moins partiellement à la capacité de fonctionnement du second dispositif utilitaire électronique (3).

6. Appareil de communication selon l'une quelconque des revendications précédentes, dans lequel l'appareil de communication (1) est compatible IMS et est conçu pour être connecté en service aux premier et second dispositifs utilitaires électroniques (2, 3) via un réseau de communication compatible IMS (6).

7. Appareil de communication selon l'une quelconque des revendications précédentes, dans lequel l'appareil de communication est conçu pour pouvoir être connecté à un dispositif utilitaire électronique (4, 5) non compatible IMS via une passerelle compatible IMS (7).

8. Appareil de communication selon l'une quelconque des revendications précédentes, dans lequel l'unité de traitement (11) est conçue pour disposer au moins un élément parmi les informations d'état et les données de présence, pour tout dispositif utilitaire électronique (2 à 5) pour lequel des informations de capacité de fonctionnement ont été obtenues.

9. Appareil de communication selon l'une quelconque des revendications précédentes, dans lequel l'appareil de communication est un équipement portatif de radiocommunication mobile, un terminal radio mobile, un téléphone mobile, un boîtier de recherche de personnes, un communicateur, un organisateur électronique, un téléphone intelligent ou un ordinateur.

10. Procédé de gestion à distance de dispositifs utilitaires électroniques, comprenant les étapes consistant à :
acquérir des informations de capacité de fonctionnement, intéressant la capacité de fonctionnement d'un premier dispositif utilitaire électronique (2) et d'au moins un second dispositif utilitaire électronique (3) ;
déterminer, sur la base des informations de capacité de fonctionnement acquises et d'une table de consultation contenant des informations sur la mise en correspondance des informations de capacité de fonctionnement, si la capacité de fonctionnement du premier dispositif utilitaire électronique (2) correspond à la capacité de fonctionnement du second dispositif utilitaire électronique (3) ; et
lorsque la capacité de fonctionnement du premier dispositif utilitaire électronique (2) correspond au moins partiellement à la capacité de fonctionnement du second dispositif utilitaire électronique (3), disposer le premier dispositif utilitaire électronique en association avec le second dispositif utilitaire électronique dans une interface utilisateur (8) ;
**caractérisé en ce que**, lorsqu'un utilisateur sélectionne le second dispositif utilitaire électronique dans ladite interface utilisateur, une communication est lancée entre le premier dispositif utilitaire électronique (2) et le second dispositif utilitaire électronique (3) en établissant automatiquement une session entre lesdits premier et second dispositifs utilitaires électroniques.

11. Procédé selon la revendication 10, dans lequel les informations de capacité de fonctionnement comprennent des données de présence et l'étape de détermination comprend le fait de déterminer si des données de présence intéressant la capacité de fonctionnement du premier dispositif utilitaire électronique (2) correspondent au moins partiellement à des données de présence intéressant la capacité de fonctionnement du second dispositif utilitaire électronique (3).

12. Procédé selon la revendication 10 ou 11, dans lequel les informations de capacité de fonctionnement comprennent des données d'état et l'étape de détermination comprend le fait de déterminer si des données d'état intéressant la capacité de fonctionnement du premier dispositif utilitaire électronique (2) correspondent au moins partiellement à des données d'état intéressant la capacité de fonctionnement du second dispositif utilitaire électronique (3).

13. Procédé selon l'une quelconque des revendications 10 à 12, dans lequel l'étape de disposition comprend le fait de disposer les premier et second dispositifs utilitaires électroniques (2, 3) dans un menu commun de l'interface utilisateur (8) lorsque la capacité de fonctionnement du premier dispositif utilitaire électronique (2) correspond au moins partiellement à la capacité de fonctionnement du second dispositif utilitaire électronique (3).

14. Procédé selon l'une quelconque des revendications 10 à 12, dans lequel l'étape de disposition comprend le fait de disposer le premier dispositif utilitaire électronique (2) dans un premier menu de l'interface utilisateur (8) et le second dispositif utilitaire électronique (3) dans un second menu de l'interface utilisateur (8), qui est accessible via le premier menu, lorsque la capacité de fonctionnement du premier dispositif utilitaire électronique (2) correspond au moins partiellement à la capacité de fonctionnement du second dispositif utilitaire électronique (3).

15. Procédé selon l'une quelconque des revendications 10 à 14, dans lequel l'étape de disposition comprend le fait de disposer au moins un élément parmi les informations d'état et les données de présence, pour tout dispositif utilitaire électronique (2 à 5) pour lequel des informations de capacité de fonctionnement ont été obtenues.

16. Progiciel d'ordinateur comprenant des moyens de code de programme d'ordinateur destinés à exécuter le procédé selon l'une quelconque des revendications 10 à 15 lorsque lesdits moyens de code de programme d'ordinateur sont exécutés par un dispositif électronique ayant des capacités d'ordinateur.
